# EUROPEAN PATENT SPECIFICATION

(11) **EP 1 914 161 B1**
(45) Date of publication and mention of the grant of the patent: **01.03.2017**
(21) Application number: 07019856.9
(22) Date of filing: 10.10.2007
(51) Int. Cl.: B63H 21/20, B63H 21/21, B63H 20/20, B63H 20/00

(54) **Hybrid watercraft propulsion system and operation control method therefor**
Hybrides Antriebsystem für Wasserfahrzeug und Steuerverfahren für dessen Betrieb
Système hybride de propulsion de bateaux et procédé de contrôle pour son fonctionnement

(30) Priority: 17.10.2006 JP 2006282197
(43) Date of publication of application: 23.04.2008
(73) Proprietor: Yamaha Hatsudoki Kabushiki Kaisha, Shizuoka-ken Shizuoka 438-8501 (JP)
(72) Inventor: Mizokawa, Takashi, Hamamatsu-shi Shizuoka-ken (JP)
(74) Representative: Grünecker Patent- und Rechtsanwälte PartG mbB

(56) References cited:
- JP-A- 2001 270 495
- JP-A- 2001 301 692
- JP-A- 2004 257 294
- US-B1- 6 857 918

## Description

This invention relates to a watercraft propulsion system according to the preamble of independent claim 1 and an operation control method to the preamble of independent claim 7.

Such a watercraft propulsion system and such an operation control method can be taken from the prior art document JP 2001-301 692. Said prior art relates to a propulsion device for a ship which includes an engine and a propeller as well as a propeller shaft connecting the propeller and the engine. Between said propeller and the engine, an electric motor is provided. Said electric motor 31 can be used as some kind of charging means for the battery, as some kind of drive means for the propeller as well as some kind of assist drive means in combination with the engine. When slowing down suddenly, connection with the propeller shaft, the engine or the slow-down receiving gear is left by disengaging the clutch which transmits the driving force of the engine.

Prior art document JP 2001-270 495 teaches a propulsion device for ship and drive controlling method with a prime mover in combination with a motor in order to drive a propeller. When slowing down suddenly, an engine charges a battery in the deceleration procedure.

Moreover, JP-A-2004-257294 discloses an art in which the driving force by an electric motor assists the driving force by an engine to drive a power transmitting device.

Also, in JP-A-2006-36086, a throttle grip which is pivotally operable is attached to a bar handle and a control switch is disposed adjacent to the throttle grip.

Operations and is stopping of an engine and an electric motor and rotational directions of the electric motor can be controlled by operating the control switch, and rotational speeds of the electric motor and engine speeds of the engine are adjustable in response to a rotational operation of the throttle grip.

There might be a risk that such conventional arts do not serve for promptly stopping a watercraft because the engines and the electric motors are simply stopped for stopping the watercraft.

Also, conventional engine outboard motors include an outboard motor whose shift operation is made by an operator to quickly change gears from a forward gear to a reverse gear, if the operator wants to promptly stop a watercraft, so as to reversely rotate a propeller for stopping the watercraft. The outboard motor, however, requires a change mechanism for changing the rotational directions of the propeller, and its structure can be complicated.

Therefore, a major object of this invention is to provide a watercraft propulsion system and an operation control method therefor, whereby a watercraft can be promptly stopped, without making the structure complicated.

According to the present invention said object is solved by watercraft propulsion system having the features of independent claim 1. Moreover, said object is also solved by an operation control method having the features of independent claim 7. Preferred embodiments are laid down in the dependent claims.

Accordingly, it is provided a watercraft propulsion system including an engine and an electric motor working as drive power sources for a propeller, and further comprising a first instructing means for instructing at least a stopping operation mode; and a control means, wherein said control means is configured to stop the engine and to reversely rotate the electric motor when the first instructing means instructs the stopping operation mode.

Preferably, the control means is configured to determine whether the instructed stopping operation mode is a speed reduction assist operation mode, in which a watercraft speed reduction is to be assisted, and wherein the control means is configured to stop the engine and to reversely rotate the electric motor when the first instructing means instructs this speed reduction assist operation mode.

Further, preferably the first instructing means include an operating lever which is pivotable and is capable of instructing operation modes based upon a position thereof.

Still further, preferably the control means is configured to determine whether the speed reduction assist operation mode is instructed or not based upon a mean movement speed of the first instructing means, in particular of the operating lever.

According to a preferred embodiment, the watercraft propulsion system further comprises speed detecting means for detecting a speed of a watercraft to which the watercraft propulsion system is mounted, wherein the control means is configured to control the electric motor based upon the speed of the watercraft.

According to another preferred embodiment, the watercraft propulsion system further comprises a second instructing means for instructing the speed reduction assist operation mode by the electric motor, wherein the control means is configured to control the electric motor based upon an instruction by the second instructing means.

Moreover, it is also provided an operation control method for a watercraft propulsion system including an engine and an electric motor working as drive power sources for a propeller, comprising: a first step of receiving an instruction on at least a stopping operation mode; and a second step of stopping the engine and of reversely rotating the electric motor when the stopping operating mode is instructed.

In the following, the present invention is explained in greater detail with respect to several embodiments thereof in conjunction with the accompanying drawings, wherein:
- FIG. 1: is a schematic diagram showing a watercraft propulsion system of one embodiment,
- FIG. 2: is a schematic view showing an operating lever,
- FIG. 3(a): is a graph showing corresponding relationships between speeds of a watercraft and outputs of an electric motor, and FIG. 3(b) is a graph showing corresponding relationships between positions of a speed reduction assist lever and the outputs of the electric motor,
- FIG. 4: is a flowchart showing the overall operations of the watercraft propulsion system,
- FIG. 5: is a flowchart showing determining processes of an operating mode at a step S17,
- FIG. 6: is a flowchart showing one example of stopping processes in the embodiment shown in FIG. 1,
- FIG. 7: is a flowchart showing one example of stopping mode determining/ setting processes,
- FIG. 8: is a flowchart showing another example of the stopping processes in the embodiment shown in FIG. 1,
- FIG. 9: is a schematic diagram showing a watercraft propulsion system of another embodiment,
- FIG. 10: is a flowchart showing one example of stopping processes in the embodiment shown in FIG. 9, and
- FIG. 11: is a flowchart showing another example of the stopping processes in the embodiment shown in FIG. 9.

### Description of Reference Numerals:

10, 10a: watercraft propulsion system
12: propeller
14: engine
16: electric motor
22: electromagnetic clutch
26: bevel gear
28: electric power generating body
32: ignition device
34: throttle valve
36: engine speed sensor
37: speed sensor
38: throttle motor
40: throttle opening degree sensor
42: controller
42a: memory
44: main switch
46: operating lever
48: drive/ electric power generation switch
50: abnormality lamp
52: battery
54: battery voltage sensor
56: speed reduction assist lever

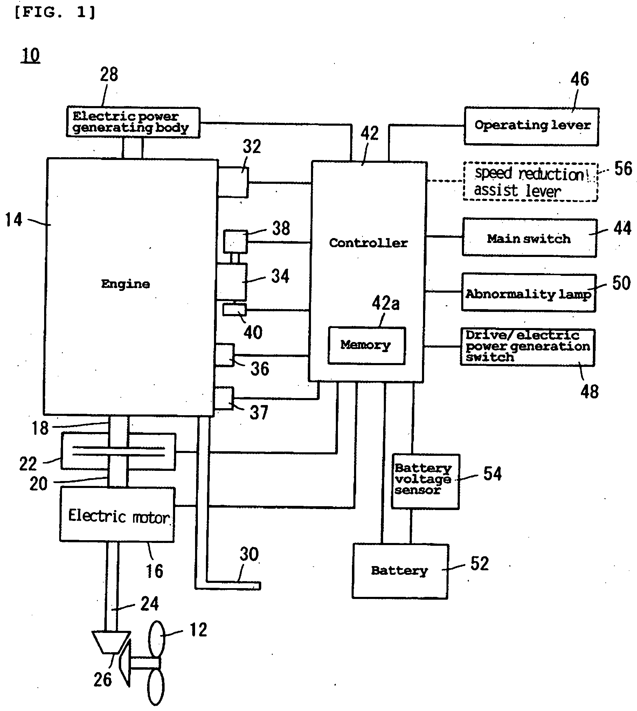

Hereunder, with reference to drawings, an embodiment will be described. Referring to FIG. 1, the watercraft propulsion system 10 of one embodiment is a "hybrid type" including a propeller 12, and an engine 14 and an electric motor 16 working as drive power sources of the propeller 12, and is a "motor-centrally-positioned type watercraft propulsion system" in which the electric motor 16 is positioned between the engine 14 and the propeller 12. Additionally, the watercraft propulsion system 10 and the watercraft propulsion system 10a that will be described later can be constructed as an outboard motor or as a part of a watercraft.

In the watercraft propulsion system 10, an electromagnetic clutch 22 is disposed between a crankshaft 18 of the engine 14 and a rotor 20 of the electric motor 16. The crankshaft 18 and the rotor 20 are connected to each other or disconnected from each other by on/ off operations of the electromagnetic clutch 22. A driveshaft 24 is coupled with the rotor 20 of the electric motor 16. The driveshaft 24 is connected to the propeller 12 through bevel gears 26. A rotational direction of the propeller is decided in accordance with a rotational direction of the electric motor 16.

An electric power generating body 28 for generating electric power by the engine is disposed above the engine 14. The electric power generating body 28 is positioned at a top end of the crankshaft 18. The engine 14 has an exhaust conduit 30 for discharging exhaust gases to water, an ignition device 32 for igniting the engine 14, a throttle valve 34 for adjusting a fuel supply amount to the engine 14, an engine speed sensor 36 for detecting an engine speed, and a speed sensor 37 for detecting a speed of the watercraft to which the watercraft propulsion system 10 is mounted. The throttle valve 34 has a throttle motor 38 for driving the throttle valve 34 and a throttle opening degree sensor 40 for detecting an opening degree of the throttle valve 34. The exhaust conduit 30 is placed in such a manner that its exhaust outlet is positioned more rearward than the propeller 12.

A controller 42 is connected to the electric motor 16, the electromagnetic clutch 22, the electric power generating body 28, the ignition device 32, the engine speed sensor 36, the speed sensor 37, the throttle motor 38 and the throttle opening degree sensor 40. Also, the controller 42 is connected to a main switch 44 for starting/ stopping the operation of the watercraft propulsion system 10, an operating lever 46 for instructing a magnitude of an output of the drive power source along with a sort of operating mode, a drive/ electric power generation switch 48 for setting either one of drive power generation and electric power generation, an abnormality lamp 50 for indicating abnormality, a battery 52 such as, for example, a 24V battery, and a battery voltage sensor 54 for detecting a voltage of the battery 52.

To the controller 42, a signal indicative of an opening degree of the throttle valve 34 is provided from the throttle opening degree sensor 40, a signal indicative of an engine speed of the engine 14 is provided from the engine speed sensor 36, a signal indicative of a speed of the watercraft is provided from the speed sensor 37, an on/ off signal is provided from the main switch 44, a lever position signal indicative of a sort of operation mode and a magnitude of the output of the drive power source is provided from the operating lever 46, a setting signal indicative of either one of drive power generation and electric power generation is provided from the drive/ electric power generation switch 48, and a signal indicative of a battery voltage is provided from the battery voltage sensor 54. Also, an electric power obtained by electric power generation by the electric power generating body 28 is charged into the battery 52 through the controller 42.

Also, the controller 42 provides an ignition instruction to the ignition device 32, a drive signal to the throttle motor 38, an on/ off signal to the electromagnetic clutch 22, a drive signal and the electric power from the battery 52 to the electric motor 16, and a lamp turning-on signal to the abnormality lamp 50.

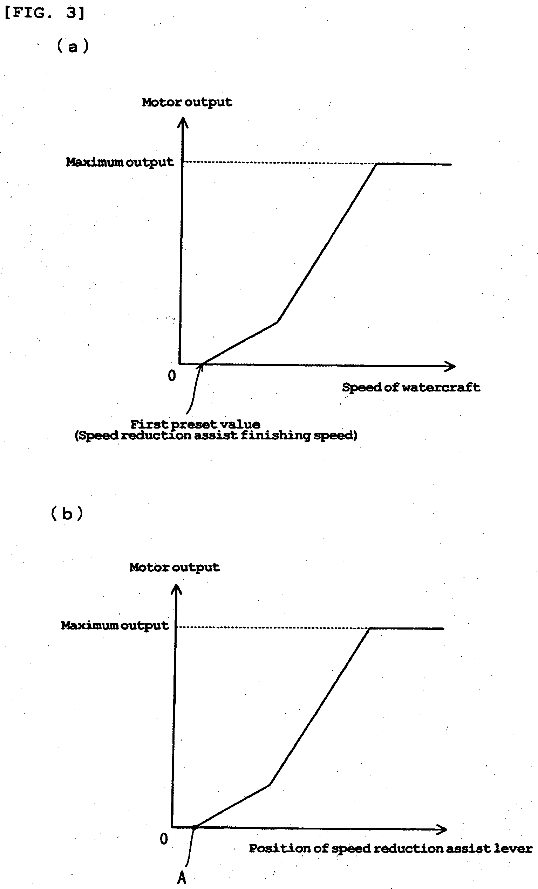

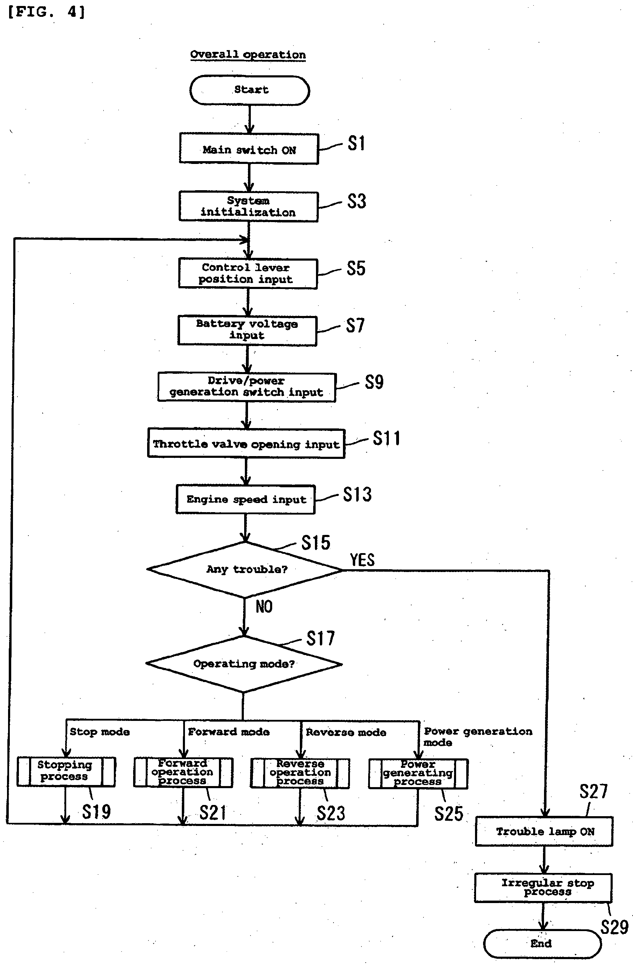

Further, the controller 42 includes a memory 42a. The memory 42a stores programs for executing operations shown in FIGs. 4 through 8. Also, the memory 42a stores calculation data, a speed reduction assist flag, a first preset value compared with a speed of the watercraft, a second preset value compared with a mean movement speed of the operating lever 46, table data representing corresponding relationships between speeds of the watercraft and outputs of the electric motor 16 shown in FIG. 3(a), etc.

In this embodiment, the operating lever 46 corresponds to the first instructing means. The controller 42 corresponds to the control means. The speed sensor 37 corresponds to the speed detecting means.

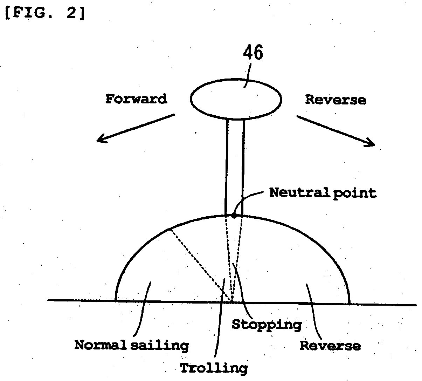

Next, with reference to FIG. 2, relationships between positions of the control lever 46 and sorts of the operation modes. As shown in FIG. 2, the operating lever 46 is pivotable back and forth, positions thereof can instruct the sorts (normal sailing, trolling, stopping and backing) of operation modes, and the positions also can instruct magnitudes of outputs of the drive power sources.

A preset forward and reverse range interposing a neutral point of the operating lever 46 represents a stopping mode, another preset range covering more forward direction area than the above noted range represents a trolling mode, and a range covering further forward thereof represents a normal sailing mode. Also, a reverse direction range extending backward from the stopping mode represents a backing mode.

According to the arrangement, an operator can easily and continuously instruct the sorts of operation modes and the magnitudes of the outputs of the drive power sources by pivotally operating the operating lever 46. The operability can be extremely enhanced, accordingly.

Also, strictly, mode change positions of the operating lever 46 are different between the mode change position in an opening operation whereby the operating lever leaves away from the neutral point and the mode change position in a closing operation whereby the operating lever approaches the neutral point, i.e., the so-called hysteresis is provided. Thereby, a "play" can be provided in the mode change operations. Frequent mode changes are prevented from occurring in the vicinity of boundaries of neighboring mode ranges.

With reference to FIG. 4, the overall operation of the watercraft propulsion system 10 as noted above will be described. First of all, when a main switch 44 is pushed (step S1), the system is initialized (step S3).

Next, to the controller 42, a lever position signal of the operating lever 46 is inputted (step S5) and a signal indicative of a battery voltage detected by the battery voltage sensor 54 is inputted (step S7). Further, to the controller 42, a setting signal from the drive/ electric power generation switch 48 is inputted (step S9), a signal indicative of an opening degree (throttle valve position) of the throttle valve 34 detected by the throttle opening degree sensor 40 is input (step S11), and a signal indicative of an engine speed detected by the engine speed sensor 36 is inputted (step S13). Based on these inputs, the controller 42 detects whether any abnormality of the watercraft propulsion system 10 exists or not (step S15). If no abnormality is detected, one of the operation modes is determined (step S17).

If the operation mode is the stopping mode, stopping processes are executed (step S19). If the operation mode is an advancing mode, advancing processes are executed (step S21). If the operation mode is the backing mode, backing processes are executed (step S23). If the operation mode is the electric power generating mode, electric power generating processes are executed (step S25). Afterwards, the program returns to the step S5.

On the other hand, if any abnormality is detected at the step S15, the abnormality lamp 50 is turned on by the instruction from the controller 42 (step S27) and an abnormality stopping process is executed (step S29). Then, the program ends.

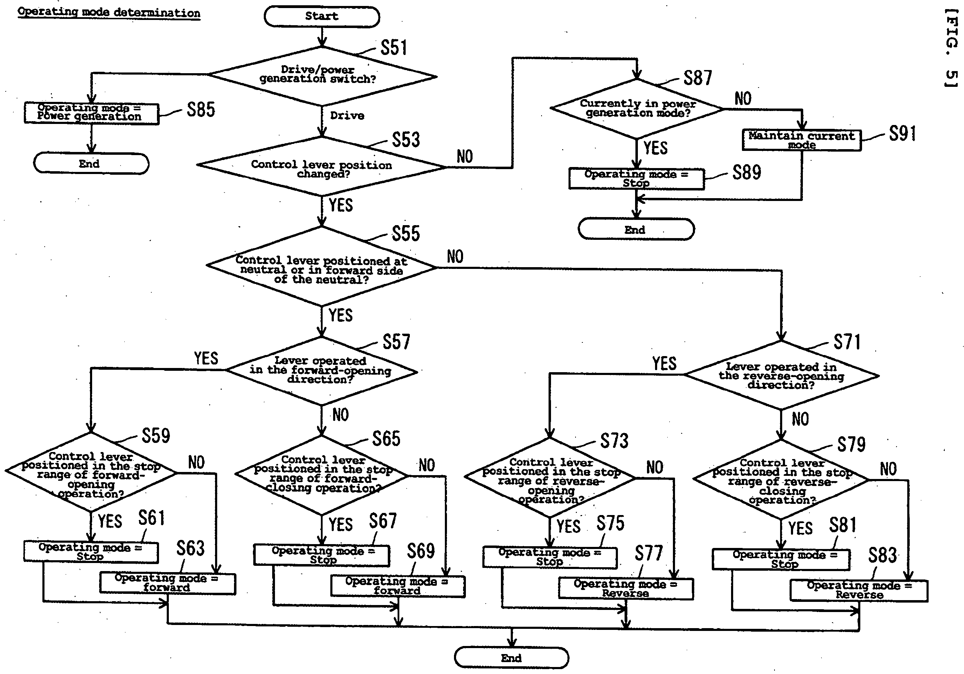

Hereunder, with reference to FIG. 5, the operation mode determining processes executed at the step S17 of FIG. 4 will be described in detail.

First, the controller 42 determines whether the setting signal from the drive/ electric power generation switch 48 indicates the electric power generation or the drive power generation (step S51). If the drive power generation is set, it is determined whether the position of the operating lever 46 changes or not (step S53). If the lever position changes, it is determined whether the position of the operating lever 46 is placed at the neutral point or in the forward range more than the neutral point (step S55). If the position of the operating lever 46 is at the neutral point or in the forward range more than the neutral point, it is determined whether the operational direction of the operating lever 46 is a forward opening direction or not (step S57). The operational direction of the operating lever 46 can be determined based upon the lever positions in the last control cycle and in the present control cycle.

If, at the step S57, the lever operational direction is the forward opening direction, it is determined whether the position of the operating lever 46 is in the stopping range in the forward opening operation or not (step S59). If the lever position is in the stopping range, it is determined that the operation mode is the stopping mode (step S61). On the other hand, if the lever position is not in the stopping range in the forward opening operation at the step S59, it is determined that the operation mode is the advancing mode (step S63). Additionally, when the operation mode is determined to be the advancing mode, the operation mode is initially determined to be the trolling mode.

If it is determined, at the step S57, that the operational direction of the operating lever 46 is the forward closing direction, it is determined whether the position of the operating lever 46 is in the stopping range in the forward closing operation or not (step S65). If the lever position is in the stopping range, it is determined that the operation mode is the stopping mode (step S67). On the other hand, if the lever position is not in the stopping range in the forward opening operation at the step S65, it is determined that the operation mode is the advancing mode (step S69).

Also, if the position of the operating lever 46 is in the reverse range more than the neutral point at the step S55, the controller goes to a step S71. It is determined, at the step S71, whether the operational direction of the control lever 46 is in the reverse opening direction or not. If it is the reverse opening direction, it is determined whether the lever position is in the stopping range in the reverse opening operation (step S73). If the lever position is in the stopping range, the operation mode is determined to be the stopping mode (step S75). On the other hand, if the lever position is not in the stopping range in the reverse opening operation at the step S73, the operation mode is determined to be the backing mode (step S77).

If, at the step S71, the operational direction of the operating lever 46 is determined to be in the reverse closing direction, it is determined whether the lever position is in the stopping range in the reverse closing operation or not (step S79). Then, if the lever position in the stopping range, the operation mode is determined to be the stopping mode (step S81). On the other hand, if the lever position is not in the stopping range in the reverse closing operation at the step S79, the operation mode is determined to be the backing mode (step S83).

Also, if the drive/ electric power generation switch 48 is set to the electric power generation at the step S51, the operation mode is determined to be the electric power generating mode (step S85).

If the position of the operating lever 46 is not changed at the step S53, it is determined whether the present mode is the electric power generating mode or not (step S87). If the present mode is the electric power generating mode, the operation mode is determined to be the stopping mode (step S89). On the other hand, if the present mode is not the electric power generating mode at the step S87, the present mode is maintained (step S91).

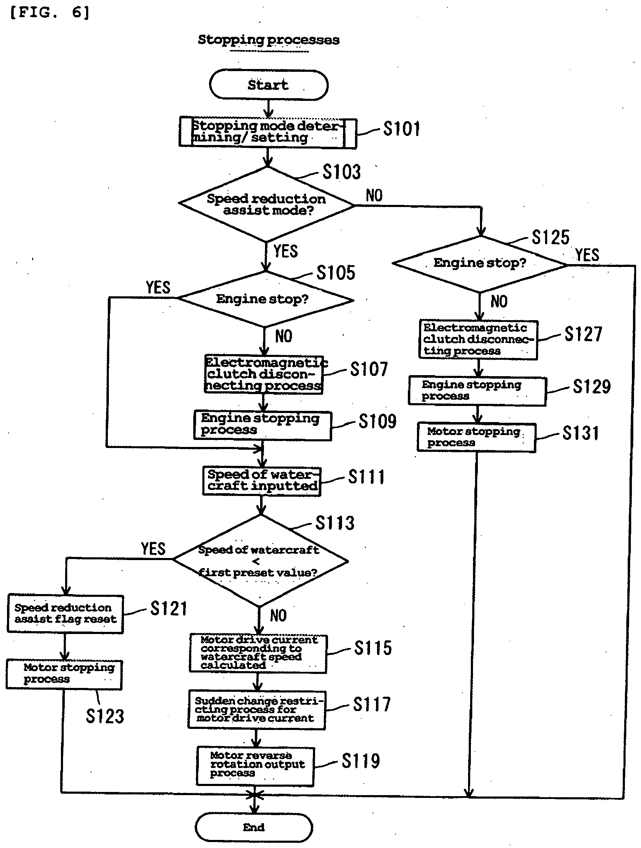

Next, with reference to FIG. 6, one operation example of the stopping processes at the step S19 of FIG. 4 will be described. Initially, a speed reduction assist flag is reset.

First, the stopping mode is determined and set (step S101). For example, if a mean movement speed of the operating lever 46 is equal to or faster than the second preset value, the speed reduction flag is set (flag is set to be "1"), the stopping mode is set to be a speed reduction assist mode in which speed reduction is assisted.

Next, the controller 42 determines whether the stopping mode is the speed reduction assist mode or not (step S103). Whether it is speed reduction assist mode or not can be determined by determining whether the speed reduction assist flag is set or not.

If the speed reduction assist flag is set and thus it is the speed reduction assist mode, the controller 42 determines whether the engine 14 is stopping or not (step S105). If the engine 14 is not stopping, a process for disconnecting the electromagnetic clutch 22 is executed (step S107), and a process for stopping the engine 14 is executed (step S109). The program proceeds to a step S111. On the other hand, if the engine 14 is stopping at the step S105, the program 42 directly proceeds to a step S111.

At the step S111, a signal indicative of a speed of the watercraft detected by the speed sensor 37 is inputted into the controller 42. It is determined whether the speed of the watercraft is lower than the first preset value (speed reduction assist finishing speed, for example, one knot) or not (step S113). If the speed of the watercraft is equal to or higher than the first preset value, the controller. 42, referring to the table data that represent the corresponding relationships of FIG. 3(a), calculates a drive current for the electric motor provided to the electric motor 16 so that a motor output corresponding to the speed of the watercraft is obtained (step S115). Then, a sudden change restricting process is executed (step S117) so that the drive current for the electric motor does not suddenly change, and a reverse rotation output process of the electric motor 16 is executed (step S119). On the other hand, if the speed of the watercraft is lower than the first preset value at the step S113, the controller 42 resets the speed reduction assist flag (flag is set to be "0")(step S121) and executes the stopping process of the electric motor 16 (step S123).

As thus discussed, in the speed reduction assist mode, the processes of the steps S105 through S123 are executed to stop the engine 14 and to reversely rotate the electric motor 16 so as to reversely rotate the propeller 12; thereby, the watercraft is slowed and stopped.

On the other hand, if the speed reduction assist flag is reset and thus the operation mode is not the speed reduction assist mode at the step S103, the controller 42 determines whether the engine 14 is stopping or not (step S125). If the engine 14 is not stopping, the process for disconnecting the electromagnetic clutch 22 is executed (step S127), the process for stopping the engine 14 is executed (step S129), and the stopping process of the electric motor 16 is executed (step S131). On the other hand, if the engine 14 is stopping at the step S125, the program ends.

If the operation mode is not the speed reduction assist mode as discussed above, the processes of the steps S125 through S131 are executed to stop the engine 14 without reversely rotating the electric motor 16; thereby, the watercraft is slowed and stopped.

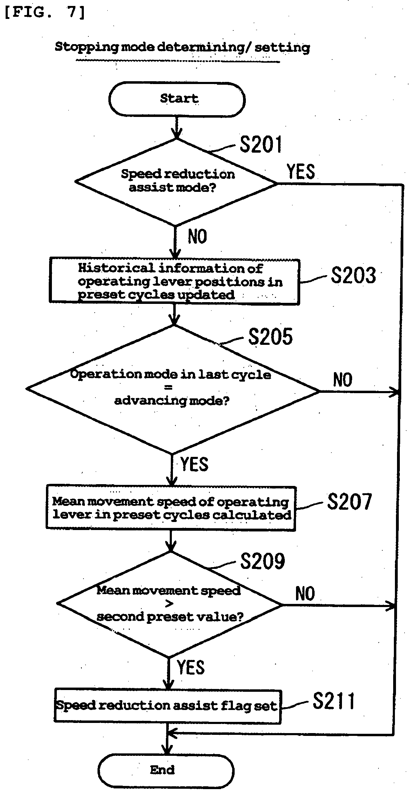

Next, with reference to FIG. 7, determining/ setting processes of the stopping mode indicated at the step S101 of FIG. 6 will be described.

First, the controller 42 determines whether the operation mode is the speed reduction assist mode or not (step S201). If it is not the speed reduction assist mode, historical information of the operating lever positions within past preset cycles (for example, ten times) stored in the memory 42a is updated (step S203). The controller 42 determines whether the operating mode in the last cycle is the advancing mode or not (step S205). If the operating mode in the last cycle is the advancing mode, a mean movement speed of the operating lever 46 through the past preset cycles is calculated (step S207). This mean movement speed is found, for example, as follows: A movement distance of the operating lever 46 in one cycle is found based upon the historical information of the operating lever position stored in the memory 42a. The movement distance is divided by the required time for one cycle to obtain a movement speed in one cycle. This process is repeatedly executed on the past preset cycles. Then, the obtained movement speeds are averaged to find the mean movement speed.

The controller 42 determines whether the mean movement speed is greater than the second preset value (step S209). If the mean movement speed is greater than the second preset value, the controller 42 determines that it is instructed the speed reduction assist mode, the speed reduction assist flag is set, and the controller 42 sets the speed reduction assist mode (step S211). On the other hand, if the mean movement speed is equal to or lower than the second preset value at the step S209, the controller 42 determines that it is not instructed the speed reduction assist mode and proceeds with keeping the speed reduction assist flag reset.

Also, if the step S201 is "YES", the controller 42 proceeds with keeping the speed reduction assist flag set. If the step S205 is "NO", the controller 42 proceeds with keeping the speed reduction assist flag reset.

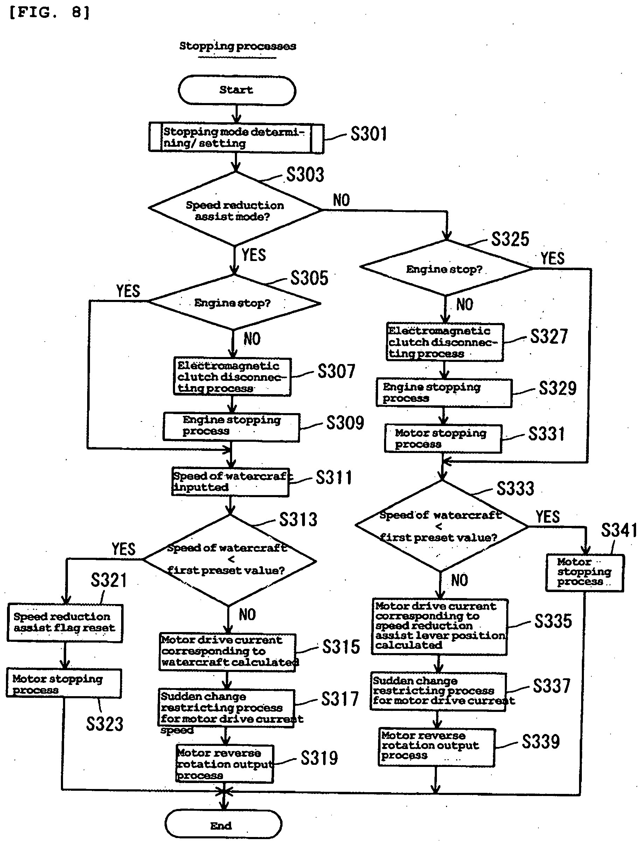

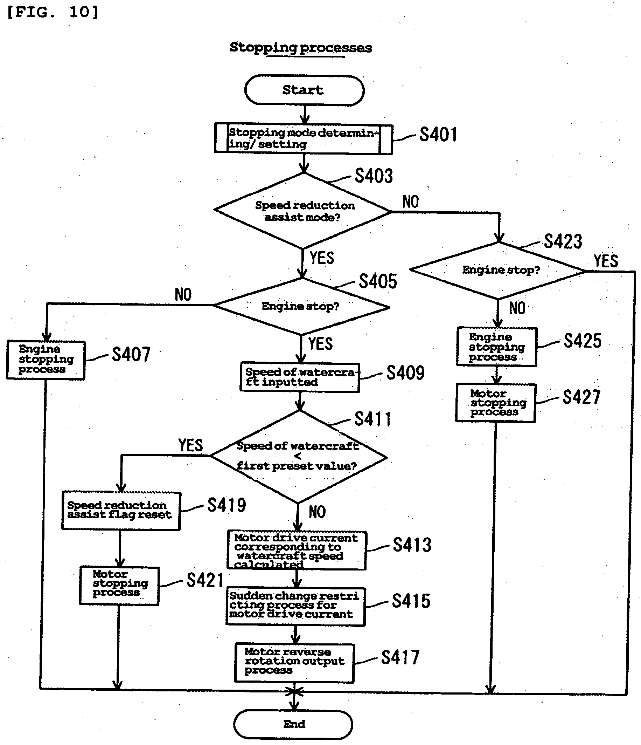

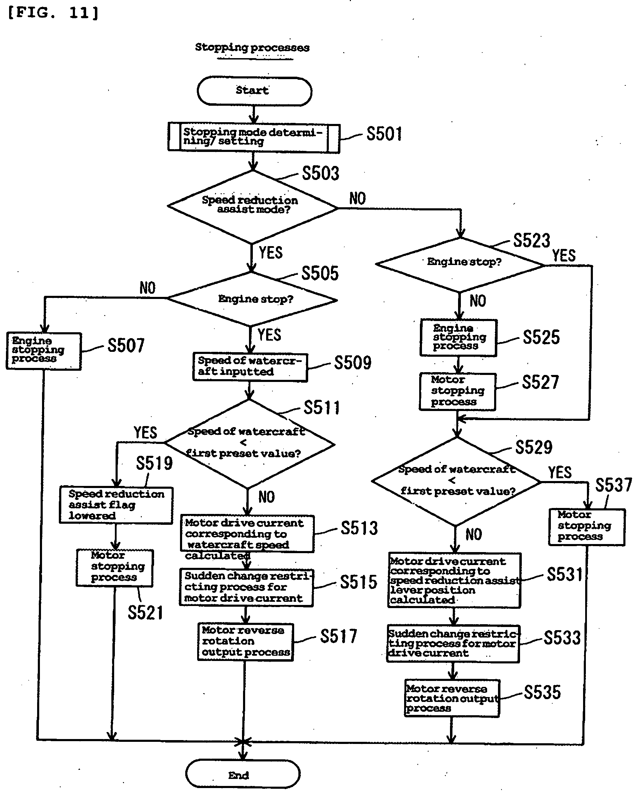

Additionally, also at a step S301 of FIG. 8, at a step S401 of FIG. 10 and at a step S501 of FIG. 11, the processes of FIG. 7 are executed.

According to this operation example, when the speed reduction assist mode is instructed as the stopping mode, not only the engine 14 is stopped but also the electric motor is reversely rotated to reversely rotate the propeller 12; thereby, the watercraft can be promptly stopped. On the other hand, if the speed reduction assist mode is not instructed, the engine 14 is stopped without the electric motor 16 being reversely rotated to execute the stopping process. As thus discussed, by allowing instructing whether the stopping mode is the speed reduction assist mode or not, the watercraft can be stopped in desired one of the modes.

Also, because the propeller 12 can be reversely rotated by simply reversely rotating the electric motor 16, no change mechanism is required, differently from a conventional engine outboard motor, and the structure is not complicated.

Further, not like the conventional engine outboard motor whose gears are operated by the operator from the forward gear to the reverse gear, it is possible to easily and promptly instruct the speed reduction assist mode by the pivotal movement of the operating lever toward the neutral point from the forward range in a speed higher than the preset speed. Thereby, the feeling of the operator in operating the watercraft can be enhanced. Also, because neither noise nor vibrations are made, the feeling in operating the watercraft can be also enhanced at this point.

Also, it can be determined whether the speed reduction assist mode is surely instructed or not based upon the mean movement speed of the operating lever.

The engine 14 is stopped in the stopping mode. In addition, the electric motor 16 is reversely rotated in response to the speed of the watercraft until the speed of the watercraft to which the watercraft propulsion system 10 is mounted falls below the first preset value that is extremely slow speed, and the electric motor 16 is stopped when the speed of the watercraft falls below the first preset value. As thus noted, the electric motor 16 is controlled based upon the speed of the watercraft to smoothly and promptly stop the watercraft.

Next, with reference to FIG. 8, another operation example of the stopping process at the step S19 of FIG. 4 will be described. In order to perform this operation, the watercraft propulsion system 10 further has a speed reduction assist lever 56 corresponding to the second instructing means for instructing speed reduction assist by the electric motor 16. The memory 42a stores table data representing corresponding relationships between positions (operational amounts) of the speed reduction assist lever 56 and the outputs of the electric motor 16 shown in FIG. 3(b).

Initially, the speed reduction assist flag is reset. Additionally, because the processes of the steps S301 through S331 shown in FIG. 8 are the same as the processes of the steps S101 through S131 shown in FIG. 6, the duplicate descriptions are omitted and processes of steps S333 through S341 will be described below.

In operations, after executing the process of the step S331 or if the step 325 is YES, the program proceeds to the step S333.

At the step S333, it is determined whether the speed of the watercraft is lower than the preset value (for example, one knot) or not. If the speed of the watercraft is equal to or higher than the first preset value, the controller 42, referring to the table data that represent the corresponding relationships of FIG. 3(b), calculates a drive current for the electric motor provided to the electric motor 16 so that a motor output corresponding to the position of the speed reduction assist lever is obtained (step S335). Then, the sudden change restricting process is executed (step S337) so that the drive current for the electric motor does not suddenly change, and a reverse rotation output process of the electric motor 16 is executed (step S339). Additionally, if the position (operational amount) of the speed reduction assist lever 56 is located between "0" and "A" (see FIG. 3(b), the reverse rotation output of the electric motor 16 is "0". Thus, the speed reduction assist by the speed reduction assist lever 56, i.e., the reverse rotation of the electric motor 16 is not made.

On the other hand, if the speed of the watercraft is lower than the first preset value at the step S333, the stopping process of the electric motor 16 is executed (step S341).

According to this operation example, the same effect as that of the previously described operation example is obtained. Further, if the operator wants to quickly stop the watercraft even in a mode other than the speed reduction assist mode, the operator can reversely rotate the electric motor 16 to reversely rotate the propeller 12 by operating the speed reduction assist lever 46. The speed reduction assist is performable in such a way, and the convenience for the operator can be enhanced.

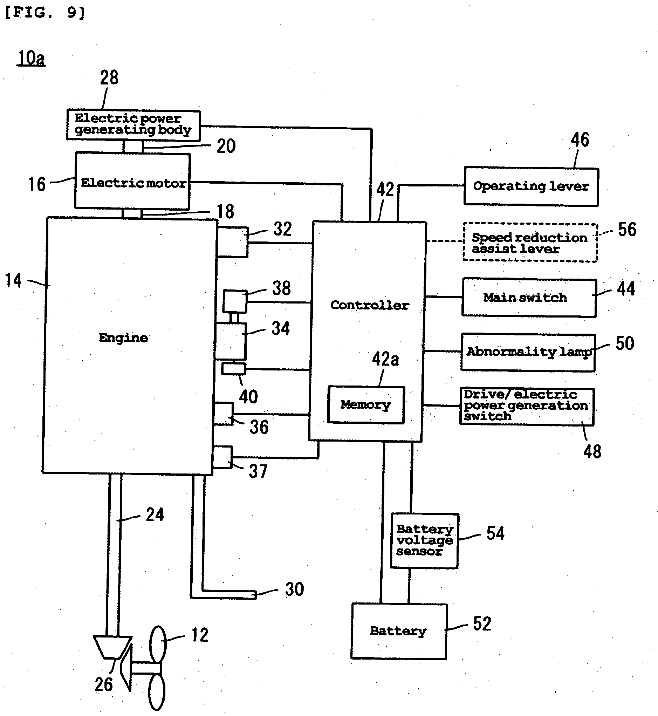

Next, with reference to FIG. 9, a watercraft propulsion system 10a of another embodiment will be described.

The watercraft propulsion system 10a is structured as a motor-upper-location-positioned type in which an electric motor 16 is located above an engine 14 and has no electromagnetic clutch 22. A driveshaft 24 is coupled with a lower end portion of a crankshaft 18 of the engine 14. A rotor 20 of the electric motor 16 is coupled with a top end portion of the crankshaft 18. An electric power generating body 28 is disposed at a top end of the rotor 20. A memory 42a stores programs or the like for executing operations shown in FIGs. 10 and 11. Because the other structures are the same as those of the watercraft propulsion system 10, the duplicate descriptions are omitted.

Next, with reference to FIG. 10, one operation example of a stopping process of at the watercraft propulsion system 10a will be described. Initially, a speed reduction assist flag is reset.

First, the stopping mode is determined and set (step S401).

Next, the controller 42 determines whether the stopping mode is the speed reduction assist mode or not (step S403). If the speed reduction assist flag is set and thus it is the speed reduction mode, the controller 42 determines whether the engine 14 is stopping (step S405). If the engine 14 is not stopping, the process for stopping the engine 14 is executed (step S407). Because the watercraft propulsion system 10a has no electrically operated clutch 22, the reverse rotation of the electric motor 16 is started after the engine 14 is stopped.

On the other hand, if the engine 14 is stopping at the step S405, a signal indicative of the speed of the watercraft detected by the speed sensor 37 is inputted into the controller 42 (step S409). The controller 42 determines whether the speed of the watercraft is lower than the first preset value or not (step S411). If the speed of the watercraft is equal to or higher than the first preset value, the controller 42, referring to the table data that represent the corresponding relationships of FIG. 3(a), calculates a drive current for an electric motor provided to the electric motor 16 so that a motor output corresponding to the speed of the watercraft is obtained (step S413). Then, a sudden change restricting process is executed (step S415) so that the drive current for the electric motor does not suddenly change, and a reverse rotation output process of the electric motor 16 is executed (step S417). On the other hand, if the speed of the watercraft is lower than the first preset value at the step S411, the controller 42 resets the speed reduction assist flag (step S419) and executes the stopping process of the electric motor 16 (step S421).

On the other hand, if the operation mode is not the speed reduction assist mode at the step S403, the controller 42 determines whether the engine 14 is stopping or not (step S423). If the engine 14 is not stopping, the process for stopping the engine 14 is executed (step S425), and the stopping process of the electric motor 16 is executed (step S427). On the other hand, if the engine 14 is stopping at the step S423, the program ends.

According to this operation example, when the speed reduction assist mode is instructed as the stopping mode, not only the engine 14 is stopped but also the electric motor is reversely rotated to reversely rotate the propeller 12; thereby, the watercraft can be promptly stopped. On the other hand, if the speed reduction assist mode is not instructed, the engine 14 is stopped without the electric motor 16 being reversely rotated to execute the stopping process. As thus discussed, by allowing instructing whether the stopping mode is the speed reduction mode or not, the watercraft can be stopped in desired one of the modes.

Also, because the propeller 12 can be reversely rotated by simply reversely rotating the electric motor 16, no change mechanism is required, differently from a conventional engine outboard motor, and the structure is not complicated.

The engine 14 is stopped in the stopping mode. In addition, the electric motor 16 is reversely rotated in response to the speed of the watercraft until the speed of the watercraft to which the watercraft propulsion system 10 is mounted falls below the first preset value that is extremely slow speed, and the electric motor 16 is stopped when the speed of the watercraft falls below the first preset value. As thus noted, the electric motor 16 is controlled based upon the speed of the watercraft to smoothly and promptly stop the watercraft.

Moreover, with reference to FIG. 11, a further operation example of the stopping process of the watercraft propulsion system 10a will be described. In order to perform this operation, the watercraft propulsion system 10a further has a speed reduction assist lever 56. The memory 42a stores table data representing corresponding relationships between positions of the speed reduction assist lever 56 and the outputs of the electric motor 16 shown in FIG. 3(b).

Initially, the speed reduction assist flag is reset. Additionally, because the processes of the steps S501 through S527 shown in FIG. 11 are the same as the processes of the steps S401 through S427 shown in FIG. 10, the duplicate descriptions are omitted and processes of steps S529 through S537 will be described below.

In operations, after executing the process of the step S527 or if the step 523 is "YES", the program proceeds to the step S529.

At the step S529, it is determined whether the speed of the watercraft is lower than the preset value or not. If the speed of the watercraft is equal to or higher than the first preset value, the controller 42, referring to the table data that represent the corresponding relationships of FIG. 3(b), calculates a drive current for an electric motor provided to the electric motor 16 so that a motor output corresponding to the position of the speed reduction assist lever is obtained (step S531). Then, the sudden change restricting process is executed (step S533) so that the drive current for the electric motor does not suddenly change, and a reverse rotation output process of the electric motor 16 is executed (step S535).

On the other hand, if the speed of the watercraft is lower than the first preset value at the step S529, the stopping process of the electric motor 16 is executed (step S537), and the program ends.

According to this operation example, the same effect as that of the operation example shown in FIG. 10 is obtained. Further, if the operator wants to quickly stop the watercraft even in a mode other than the speed reduction assist mode, the operator can reversely rotate the electric motor 16 to reversely rotate the propeller 12 by operating the speed reduction assist lever 46. The speed reduction assist is performable in such a way, and the convenience for the operator can be enhanced.

Although the determination whether the speed reduction assist mode is instructed or not is made based upon the mean movement speed of the operating lever 46, this invention is not limited to the embodiment described above. The determination can be made based upon any information relating to the positions of the operating lever 46.

Also, it is practicable that the controller 42 is stopping the engine 14 and reversely rotates the electric motor 16 only by receiving the instruction of the stopping mode, whether the speed reduction assist mode is instructed by the operating lever 46 or not. In this alternative, further, the electric motor 16 can be controlled based upon a speed of the watercraft.

The first instructing means can be a joystick.

The second instructing means can be a pedal type which is operable by foot.

The description above discloses (amongst others), in order to achieve the object, a first embodiment of a watercraft propulsion system which is a watercraft propulsion system having an engine and an electric motor working as drive power sources for a propeller includes first instructing means for instructing a sort of operation mode, and control means for stopping the engine and for reversely rotating the electric motor when the first instructing means instruct a stopping mode.

Further, in a watercraft propulsion system according to a second embodiment, the stopping mode includes a speed reduction assist mode in which speed reduction is assisted, and the control means stop the engine and reversely rotate the electric motor when the first instructing means instruct the speed reduction assist mode.

Further, in a watercraft propulsion system according to a third embodiment, the first instructing means include an operating lever which is pivotable and is capable of instructing the sort of operation mode based upon a position thereof.

Further, in a watercraft propulsion system according to a fourth embodiment, the control means determines whether the speed reduction assist mode is instructed or not based upon a mean movement speed of the operating lever.

Further, a watercraft propulsion system according to a fifth embodiment, further includes speed detecting means for detecting a speed of a watercraft to which the watercraft propulsion system is mounted, and in that the control means control the electric motor based upon the speed of the watercraft.

Further, a watercraft propulsion system according to a sixth embodiment, further includes second instructing means for instructing the speed reduction assist by the electric motor, and in that the control means control the electric motor based upon an instruction by the second instructing means.

The description further discloses an embodiment of an operation control method for a watercraft propulsion system having an engine and an electric motor working as drive power sources for a propeller, that includes a first step of receiving an instruction on a sort of operation mode, and a second step of stopping the engine and of reversely rotating the electric motor when the first instructing means instruct the stopping mode.

According to the watercraft propulsion system recited in the first embodiment, when the stopping mode is instructed in the hybrid type watercraft propulsion system including the engine and the electric motor working as drive power sources for the propeller, not only the engine is stopped but also the electric motor is reversely rotated; thereby, the watercraft can be promptly stopped. Also, because the propeller can be reversely rotated by simply reversely rotating the electric motor, no change mechanism is required, differently from the conventional engine outboard motor, and the structure is not complicated. This is also true with the operation control method for a watercraft system, recited above.

According to the watercraft propulsion system recited in the second embodiment, if the speed reduction assist mode is instructed as the stopping mode, not only the engine is stopped but also the electric motor is reversely rotated to make a stopping operation. On the other hand, if the speed reduction assist mode is not instructed, the engine is stopped without reversely rotating the electric motor to make the stopping operation. As thus noted, by allowing instructing whether the stopping mode is the speed reduction assist mode or not, the watercraft can be stopped in desired one of the modes.

According to the watercraft propulsion system recited in the third embodiment, not like the conventional engine outboard motor whose gears are operated by the operator from the forward gear to the reverse gear, the rotational operation of the operating lever easily and promptly instructs on the speed reduction assist mode. Thereby, the feeling of the operator in operating the watercraft can be enhanced. Also, because neither noise nor vibrations are made, the feeling in operating the watercraft can be also enhanced at this point.

According to the watercraft propulsion system recited in the fourth embodiment, it can be determined whether the speed reduction assist mode is surely instructed or not based upon the mean movement speed of the operating lever.

According to the watercraft propulsion system recited in the fifth embodiment, the engine is stopped in the stopping mode. In addition, the electric motor is reversely rotated in response to the speed of the watercraft until the speed of the watercraft falls below a preset value, and the electric motor is stopped when the speed of the watercraft falls below the preset value. As thus noted, the electric motor is controlled based upon the speed of the watercraft to smoothly and promptly stop the watercraft.

According to the watercraft propulsion system recited in the sixth embodiment, if the operator wants to quickly stop the watercraft, the operator can reversely rotate the electric motor to reversely rotate the propeller by instructing through the second instructing means without operating the first instructing means. The speed reduction assist is performable in such a way, and the convenience for the operator can be enhanced.

According to the above embodiments, the watercraft can be promptly stopped, without making the structure of the watercraft propulsion system complicated.

The description above further discloses, in order to provide a watercraft propulsion system and an operation control method therefor, whereby a watercraft can be promptly stopped, without making the structure complicated, an embodiment of a watercraft propulsion system 10 which is a hybrid type watercraft propulsion system including an engine 14 and an electric motor 16 both working as drive power sources for a propeller 12. When an operating lever 46 instructs a speed reduction assist mode as a stopping mode, a controller 42 is stopping the engine 14 and reversely rotate the electric motor 16 to reversely rotate the propeller 12. The controller 42 determines whether the speed reduction assist mode is instructed or not based upon a mean movement speed of the operating lever 46 and controls the electric motor 16 based upon a speed of the watercraft. Alternatively or in addition, the controller 42 can control the electric motor 16 based upon instructions by the speed reduction assist lever 56.

Further, according to a preferred first aspect, a watercraft propulsion system is disclosed including an engine and an electric motor working as drive power sources for a propeller, and comprising: first instructing means for instructing a sort of operation mode; and control means for stopping the engine and for reversely rotating the electric motor when the first instructing means instruct a stopping mode.

Further, according to a preferred second aspect, the stopping mode includes a speed reduction assist mode in which speed reduction is assisted, and the control means stop the engine and reversely rotate the electric motor when the first instructing means instruct the speed reduction assist mode.

Further, according to a preferred third aspect, the first instructing means includes an operating lever which is pivotable and is capable of instructing the sort of operation mode based upon a position thereof.

Further, according to a preferred fourth aspect, the control means determines whether the speed reduction assist mode is instructed or not based upon a mean movement speed of the operating lever.

Further, according to a preferred fifth aspect, the watercraft propulsion system further comprises speed detecting means for detecting a speed of a watercraft to which the watercraft propulsion system is mounted, wherein the control means control the electric motor based upon the speed of the watercraft.

Further, according to a preferred sixth aspect, the watercraft propulsion system further comprises second instructing means for instructing the speed reduction assist by the electric motor, wherein the control means control the electric motor based upon an instruction by the second instructing means.

Further, according to a preferred seventh aspect, an operation control method for a watercraft propulsion system includes an engine and an electric motor working as drive power sources for a propeller, comprising: a first step of receiving an instruction on a sort of operation mode; and a second step of stopping the engine and of reversely rotating the electric motor when the first instructing means instruct a stopping mode.

## Claims

1. Watercraft propulsion system (10) including a control means (42), an engine (14) and an electric motor (16) working as drive power sources for a propeller (12), **characterized by** a first instructing means (46) for instructing at least a stopping operation mode, wherein the control means (42) is configured to stop the engine (14) and to reversely rotate the electric motor (16) when the first instructing means (46) instructs the stopping operation mode.

2. Watercraft propulsion system according to claim 1, **characterized in that** the control means (42) is configured to determine whether the instructed stopping operation mode is a speed reduction assist operation mode, in which a watercraft speed reduction is to be assisted, and wherein the control means (42) is configured to stop the engine and to reversely rotate the electric motor when the first instructing means (46) instructs this speed reduction assist operation mode.

3. Watercraft propulsion system according to claim 1 or 2, **characterized in that** the first instructing means include an operating lever (46) which is pivotable and is capable of instructing operation modes based upon a position thereof.

4. Watercraft propulsion system according to claim 2 or 3, **characterized in that** the control means (42) is configured to determine whether the speed reduction assist operation mode is instructed or not based upon a mean movement speed of the first instructing means, in particular of the operating lever.

5. Watercraft propulsion system according to one of the claims 1 to 4, **characterized by** speed detecting means (37) for detecting a speed of a watercraft to which the watercraft propulsion system is mounted, wherein the control means is configured to control the electric motor based upon the speed of the watercraft.

6. Watercraft propulsion system according to one of the claims 1 to 5, **characterized by** a second instructing means (56) for instructing the speed reduction assist operation mode by the electric motor, wherein the control means is configured to control the electric motor based upon an instruction by the second instructing means.

7. Operation control method for a watercraft propulsion system (10) including an engine (14) and an electric motor (16) working as drive power sources for a propeller (12),
**characterized by**
a first step of receiving an instruction on at least a stopping operation mode; and
a second step of stopping the engine and of reversely rotating the electric motor when the stopping operating mode is instructed.

## Patentansprüche

1. Wasserfahrzeug-Antriebssystem (10), das eine Steuereinrichtung (42), ein Triebwerk (14), und einen Elektromotor (16), die als Antriebsleistungsquellen für einen Propeller (12) arbeiten, beinhaltet, **gekennzeichnet durch** eine erste Instruktionseinrichtung (46) zum Instruieren von zumindest einem Stopp-Betriebs-Modus, wobei die Steuereinrichtung (42) konfiguriert ist um das Triebwerk (14) zu stoppen und den Elektromotor (16) rückwärts laufen zu lassen, wenn die erste Instruktionseinrichtung (46) den Stopp-Betriebs-Modus instruiert.

2. Wasserfahrzeug-Antriebssystem gemäß Anspruch 1, **dadurch gekennzeichnet, dass** die Steuereinrichtung (42) konfiguriert ist um zu bestimmen, ob der instruierte Stopp-Betriebs-Modus ein Geschwindigkeits-Reduktions-Unterstützungs-Betriebs-Modus ist, in welchem eine Wasserfahrzeug-Geschwindigkeits-Reduktion zu unterstützen ist, und wobei die Steuereinrichtung (42) konfiguriert ist, das Triebwerk zu stoppen und den Elektromotor rückwärts zu drehen, wenn die erste Instruktionseinrichtung (46) diesen Geschwindigkeits-Reduktions-Unterstützungs-Betriebs-Modus instruiert.

3. Wasserfahrzeug-Antriebssystem gemäß Anspruch 1 oder 2, **dadurch gekennzeichnet, dass** die erste Instruktionseinrichtung einen Betätigungshebel (46) beinhaltet, der schwenkbar ist, und in der Lage ist, Betriebs-Modi auf Grundlage einer Position desselben zu instruieren.

4. Wasserfahrzeug-Antriebssystem gemäß Anspruch 2 oder 3, **dadurch gekennzeichnet, dass** die Steuereinrichtung (42) konfiguriert ist um zu bestimmen, ob der Geschwindigkeits-Reduktions-Unterstützungs-Betriebs-Modus instruiert ist oder nicht, auf Grundlage einer mittleren Bewegungs-Geschwindigkeit der ersten Instruktionseinrichtung, insbesondere des Betätigungshebels.

5. Wasserfahrzeug-Antriebssystem gemäß einem der Ansprüche 1 bis 4, **gekennzeichnet durch** eine Geschwindigkeits-Erfassungseinrichtung (37) zum Erfassen einer Geschwindigkeit des Wasserfahrzeugs an dem das Wasserfahrzeug-Antriebssystem montiert ist, wobei die Steuereinrichtung konfiguriert ist, den Elektromotor auf Grundlage der Geschwindigkeit des Wasserfahrzeugs zu steuern.

6. Wasserfahrzeug-Antriebssystem gemäß einem der Ansprüche 1 bis 5, **gekennzeichnet durch** eine zweite Instruktionseinrichtung (56) zum Instruieren des Geschwindigkeits-Reduktions-Unterstützungs-Betriebs-Modus **durch** den Elektromotor, wobei die Steuereinrichtung konfiguriert ist um den Elektromotor auf Grundlage einer Instruktion durch die zweite Instruktionseinrichtung zu steuern.

7. Betriebssteuerverfahren für ein Wasserfahrzeug-Antriebssystem (10), das ein Triebwerk (14) und einen Elektromotor (16) beinhaltet, die als Antriebsleistungsquellen für einen Propeller (12) arbeiten, **gekennzeichnet durch**
einen ersten Schritt des Aufnehmens einer Instruktion von zumindest einem Stopp-Betriebs-Modus; und
einen zweiten Schritt des Anhaltens des Triebwerks und einer Rückwärtsdrehung des Elektromotors wenn der Stopp-Betriebs-Modus instruiert ist.

## Revendications

1. Système de propulsion de véhicule nautique (10) incluant un moyen de commande (42), un moteur thermique (14) et un moteur électrique (16) fonctionnant comme sources de puissance d'entraînement pour un propulseur (12), **caractérisé par** un premier moyen d'instruction (46) destiné à ordonner au moins un mode de fonctionnement en arrêt, le moyen de commande (42) étant configuré pour arrêter le moteur thermique (14) et pour faire tourner en sens inverse le moteur électrique (16) lorsque le premier moyen d'instruction (46) ordonne le mode de fonctionnement en arrêt.

2. Système de propulsion de véhicule nautique selon la revendication 1, **caractérisé en ce que** le moyen de commande (42) est configuré pour déterminer si le mode de fonctionnement en arrêt ordonné est un mode de fonctionnement d'assistance à la réduction de vitesse dans lequel la réduction de vitesse du véhicule nautique doit être assistée et si le moyen de commande (42) est configuré pour arrêter le moteur thermique et pour faire tourner en sens inverse le moteur électrique lorsque le premier moyen d'instruction (46) ordonne ce mode de fonctionnement d'assistance à la réduction de vitesse.

3. Système de propulsion de véhicule nautique selon la revendication 1 ou la revendication 2, **caractérisé en ce que** le premier moyen d'instruction inclut un levier de fonctionnement (46) qui peut pivoter et peut ordonner des modes de fonctionnement fondés sur sa propre position.

4. Système de propulsion de véhicule nautique selon la revendication 2 ou la revendication 3, **caractérisé en ce que** le moyen de commande (42) est configuré pour déterminer si le mode de fonctionnement d'assistance à la réduction de vitesse est ordonné ou non sur la base de la vitesse moyenne de mouvement du premier moyen d'instruction, en particulier du levier de fonctionnement.

5. Système de propulsion de véhicule nautique selon l'une des revendications 1 à 4, **caractérisé par** un moyen de détection de vitesse (37) destiné à détecter la vitesse du véhicule nautique sur lequel est monté le système de propulsion de véhicule nautique, le moyen de commande étant configuré pour commander le moteur électrique sur la base de la vitesse du véhicule nautique.

6. Système de propulsion de véhicule nautique selon l'une des revendications 1 à 5, **caractérisé par** un second moyen d'instruction (56) destiné à ordonner le mode de fonctionnement d'assistance à la réduction de vitesse par le moteur électrique, le moyen de commande étant configuré pour commander le moteur électrique sur la base d'une instruction effectuée par le second moyen d'instruction.

7. Procédé de commande de fonctionnement destiné à un système de propulsion de véhicule nautique incluant un moteur thermique (14) et un moteur électrique (16) fonctionnant comme sources de puissance d'entraînement pour un propulseur (12),
**caractérisé par :**
une première étape consistant à recevoir une instruction concernant au moins un mode de fonctionnement en arrêt, et
une seconde étape consistant à arrêter le moteur thermique et à faire tourner en sens inverse le moteur électrique lorsque le mode de fonctionnement en arrêt est ordonné.
